(19) Europäisches Patentamt

European Patent Office

Office européen des brevets

(11) Veröffentlichungsnummer: **0 313 737 B1**

(12) **EUROPÄISCHE PATENTSCHRIFT**

(45) Veröffentlichungstag der Patentschrift: **23.12.92**

(51) Int. Cl.⁵: **C04B 35/68**, C04B 38/00

(21) Anmeldenummer: **88112191.7**

(22) Anmeldetag: **28.07.88**

(54) **Verfahren zur Herstellung von kohlenstoffgebundenen Feuerfestformteilen und nach dem Verfahren hergestellte Formteile.**

(30) Priorität: **29.10.87 DE 3736680**

(43) Veröffentlichungstag der Anmeldung:
**03.05.89 Patentblatt 89/18**

(45) Bekanntmachung des Hinweises auf die
Patenterteilung:
**23.12.92 Patentblatt 92/52**

(84) Benannte Vertragsstaaten:
**AT BE CH DE ES FR GB GR IT LI LU NL SE**

(56) Entgegenhaltungen:
**DE-A- 1 571 410**

(73) Patentinhaber: **DIDIER-WERKE AG**
**Lessingstrasse 16-18**
**W-6200 Wiesbaden(DE)**

(72) Erfinder: **Hintzen, Ullrich**
**Lahnstrasse 20**
**W-6204 Taunusstein-Watzhahn(DE)**
Erfinder: **Schermer, Heinz**
**Gartenstrasse 15**
**W-6228 Eltville 1(DE)**
Erfinder: **Lührsen, Ernst**
**Danziger Strasse 5**
**W-6208 Bad Schwalbach(DE)**

(74) Vertreter: **Brückner, Raimund, Dipl.-Ing.**
**c/o Didier-Werke AG Lessingstrasse 16-18**
**W-6200 Wiesbaden(DE)**

**Beschreibung**

Die Erfindung betrifft den Gegenstand der Patentansprüche.

Aus der DE-OS 32 45 647 sind feuerfeste Baustoffe bekannt, denen organische Vollfasern, insbesondere Polypropylenfasern, bei ihrer Herstellung zugesetzt werden. Diese Vollfasern bilden bei der späteren Temperaturbehandlung dünne, miteinander verbundene Passagen, durch welche Feuchtigkeit bei der Temperaturbehandlung entweichen kann. Ferner ist es aus der DE-OS 34 01 054 bekannt, bei der Herstellung von monolithischen Feuerfestmaterialien zur Vermeidung einer Abplatzung durch Dampfbildung Vinylchlorid-Acetatfasern zuzusetzen, die bereits bei niedrigen Temperaturen von etwa 40° C erweichen bzw. um 50 % schrumpfen, d. h. bei einer niedrigeren Temperatur als dem Siedepunkt von Wasser entspricht, um auf diese Weise Kanäle zum Entweichen von Wasserdampf zu bilden. Weiterhin ist es aus der DE-AS 15 71 410 bekannt, bei der Herstellung von teergebundenen basischen feuerfesten Formkörpern in diesen vor oder während der Wärmebehandlung Kanäle oder Dränagen zu bilden, durch welche eine vorübergehende Porosität zur besseren Durchtemperung erzielt werden soll. Als Materialien zur Bildung dieser Kanäle oder Dränagen werden in dieser DE-AS 15 71 410 schmelzbare, flüchtige und/oder verkokbare Fasern, Fäden, Stäbe oder Bänder genannt.

Aufgabe der vorliegenden Erfindung ist es, bei der Herstellung von kohlenstoffgebundenen Feuerfestformteilen, welche unter Mitverwendung eines organsichen Bindemittelharzes und von Pech und/oder Teer hergestellt werden, eine Abpaltzung bzw. Bruchbildung bei der Temperaturbehandlung zu vermeiden und feuerfeste Formteile dieser Art herzustellen, welche nur eine geringe oder gar keine erhöhte Porosität aufweisen.

Die Herstellung solcher kohlenstoffgebundenen FeuerfestFormteile ist an sich bekannt, hierzu wird z. B. auf die DE-OS 25 53 420 und DE-PS 35 05 422 verwiesen.

Es wurde nun überaschenderweise gefunden, daß diese Aufgabe dadurch gelöst werden kann, daß der Ausgangsmischung Cellulosefasern als Hohlfasern in bestimmter Menge zugesetzt werden, wie dies im Anspruch 1 näher angegeben ist.

Hierdurch wird erreicht, daß bei dem Aushärten der Formteile nach deren Formgebung, die bei Temperaturen bis zu 250° C erfolgt, und bei der nachfolgenden Pyrolyse oder Temperbehandlung, die bei Temperaturen bis zu 1000° C durchgeführt wird, und bei dem sich gegebenenfalls hieran noch anschließenden, reduzierenden Brand bei Temperaturen bis zu 1600° C die Bildung von Rissen sicher vermieden wird, d. h. daß es zu keinen Entgasungsproblemen kommt.

Gemäß dieser Ausführungsform werden Fasern aus natürlicher Cellulose verwendet. Dies hat den Vorteil, daß sich die Cellulosefasern bei Temperaturen um 180° C zersetzen, d. h. nach dem zumindest teilweisen Aushärten des Bindemittelharzes, so daß die gebildeten Kanäle erhalten bleiben und nicht zusammengedrückt werden und damit ausreichende Möglichkeiten zum Entweichen der aus dem Teer oder Pech oder durch sonstige Zersetzung von Produkten entstehenden Gase, die von Wasserdampf verschieden sind, verbleiben.

Gemäß einer weiteren Ausführungsform werden die Cellulosefasern mit Maximallängen von 2 mm bzw. 1 mm eingesetzt. Durch den Einsatz solcher Fasern wird die Festigkeit der hergestellen Formteile besonders erhöht, ferner wird durch die Bildung relativ kurzer Kanäle nach der Zersetzung der kurzen Cellulosefasern erreicht, daß die Länge der verbleibenden Poren kurz ist, so daß ein Eindringen von Metallschmelzen, z. B. Stahlschmelze, beim Einsatz der FeuerfestFormteile nur in geringem Ausmaß oder gar nicht möglich ist.

Gemäß einer weiteren Ausführungsform beträgt die Menge der Hohlfasern, bezogen auf die Gesamtfeststoffe in der Ausgangsmischung, maximal 1 Gew.-%. Hierdurch wird erreicht, daß die letztlich im getemperten bzw. gebrannten Feuerfestformteil erzielte Porosität nur gering, z. B. um maximal 2 %, erhöht ist. Ein solcher Porositätswert ist jedoch bei einer eventuellen späteren Tränkung mit Teer für die Teeraufnahme besonders geeignet.

Gemäß einer weiteren bevorzugten Ausführungsform werden in der Ausgangsmischung bis zu 10 Gew.-%, besonders bevorzugt 2 bis 8 Gew.-%, an Teer oder Pech eingesetzt. Hierdurch werden FeuerfestFormteile mit besonders guten Eigenschaften erhalten.

Gemäß einer weiteren bevorzugten Ausführungsform werden in der Ausgangsmischung, bezogen auf die Feststoffe, bis zu 10 Gew.-%, besonders bevorzugt 2 bis 8 Gew.-%, an einem oder mehreren organischen Bindemittelharzen eingesetzt. Hierdurch wird eine besonders gute Festigkeit beim Aushärten erreicht, so daß die Bruchgefahr der Formteile beim Tempern bzw. der Pyrolyse oder bei dem späteren, gegenbenenfalls durchzuführenden, reduzierenden Brand herabgesetzt ist.

Bevorzugte organische Bindemittelharze sind Phenol-Resolharze, Phenol-Novolakharze, Furanharze, modifizierte Furanharze oder Epoxidharze, die entweder in fester Form als Pulver oder als Lösungen in dem jeweiligen geeigneten Lösungsmittel, entweder Wasser oder organischen Lösungsmittel verwendet werden.

Gemäß einer weiteren bevorzugten Ausführungsform werden zur Verbesserung bzw. Erzielung von bestimmten Eigenschaften im fertigen Feuerfestformteil noch bis zu 10 Gew.-%, besonders bvorzugt 2 bis 8 Gew.-%, an feinzerteiltem Siliziummetall, bevorzugt mit einer Korngröße unterhalb 0,09 mm, zugesetzt.

Ferner ist es zur Herstellung von besonders kohlenstoffreichen FeuerfestFormteilen bevorzugt, bis zu 10 Gew.-%, besonders bevorzugt 2 bis 8 Gew.-%, an feinzerteiltem Ruß und/oder Grphit, insbesondere Flockengraphit, zuzusetzen. Hierdurch können die Eigenschaften der fertigen FeuerfestFormteile ebenfalls variiert werden.

Die bei den erfindungsgemäßen FeuerfestFormteilen verwendeten, Feuerfestmaterialien können beliebige der auf dem Fachgebiet verwendeten Materialein sein und sie werden in der üblichen Korngrößenverteilung eingestzt, z. B. mit Korngrößen von 0,09 bis 6 mm, wobei die oberen Korngrößen von dem gewünschten Einsatz der FeuerfestFormteile abhängig sind und auch bei geringeren Werten wie 2 bzw. 4 mm liegen können. Bevorzugt ist die Verwendung von Mullit, Zirkonmullit, Tabulartonerde, Korund und SiC. Die Verwendung von Mischungen von Feuerfestmaterialien ist ebenfalls möglich.

Die erste Stufe zur Herstellung der Ausgangsmischung wird vorteilhafterweise so durchgeführt, daß die Cellulosefasern zunächst mit den festen Feuerfestmaterialien vermischt werden und dann erst eine Mischung aus Bindemittelharz und dem Pech oder Teer als sogenannte Kaltmischung zugegeben wird, hieran schließt sich ein weiters gründliches Vermischen und die Formgebung an. Es ist aber auch möglich, zu der Mischung von Feuerfestmaterialien und Bindemittelharz eine getrennt hergestellte Vormischung aud Teer oder Pech mit den Fasern zuzusetzen.

Nach der Formgebung erfolgt das Aushärten des Bindemittelharzes, üblicherweise bei Temperaturen von 80 bis 250° C. Gegebenenfalls kann bei Verwendung eines wasserhaltigen Bindemittelharzes wie einer Resollösung vorher noch eine Trocknungsstufe vorgeschaltet werden.

Anschließend erfolgt die Temperbehandlung bzw. Pyrolyse von Fasern, Bindemittel und gegebenenfalls des Teers oder Pechs bei Temperaturen zwischen 200 und 1000° C, bevorzugt zwischen 200 und 600° C. Aushärtungs- und Temper-Temperaturen können sich teilweise überschneiden. Abschließend kann noch ein Brennen unter reduzierenden Bedingungen bei Temperaturen bis zu 1600° C durchgeführt werden.

Die Erfindung wird anhand des folgenden Beispiels näher erläutert.

Beispiel

Es wurde eine Ausgangsmischung aus folgenden Stoffen hergestellt:

```
Tabulartonerde     0  bis 0,04 mm      25 Gew.-Teile
     "          0,04 bis 0,3  mm      10      "
     "           0,3 bis 0,6  mm      10      "
     "           0,6 bis 1,2  mm      15      "
     "           1,2 bis 2,4  mm      10      "
Zirkonmullit       0  bis 0,5  mm      10      "
     "           0,5 bis 1,0  mm      10      "
Si-Metall        unter 0,2   mm        5      "
Ruß              feinteilig            5      "
Pech             mehlförmig          + 5      "
Phenolresolharz                      + 7      "
Cellulosefasern Faserlänge 1 mm *   + 0,5     "

  * Handelsprodukt mit der Warenbezeichnung 'Arbocel'
    Faserdurchmesser ca. 20 µm
```

Die Ausgangsstoffe wurden in der angegebenen Reihenfolge in einem Zwangsmischer vermischt, isostatisch zu Steinen verpreßt, bei 80° C für 4 h getrocknet, dann bei 185° C für 3 h ausgehärtet und

3

EP 0 313 737 B1

anschließend bei 900° C unter reduzierender Atmosphäre für 8 h getempert bzw. pyrolysiert.
Hierbei wurde keine Rißbildung bzw. kein Bruch an den Steinen festgestellt.

**Patentansprüche**

1. Verfahren zur Herstellung von kohlenstoffgebundenen FeuerfestFormteilen durch Herstellen einer Mischung aus feuerfesten Materialien, Pech oder Teer und einem Bindemittelharz, Verforming zu Formteilen und Härtung sowie gegebenenfalls Tempern der Formteile, dadurch gekennzeichnet, daß eine Ausgangsmischung verwendet wird, welche, bezogen auf die zugesetzte Gewichtsmenge an Pech oder Teer, 1 bis 10 Gew.-% an Cellulosefasern als Hohlfasern enthält.

2. Verfahren nach Anspruch 1, dadurch gekennzeichnet, daß Cellulosefasern mit einer Länge von maximal 2 mm eingesetzt werden.

3. Verfahren nach Anspruch 2, dadurch gekennzeichnet, daß Cellulosefasern mit einer Länge von maximal 1 mm eingesetzt werden.

4. Verfahren nach einem der vorhergehenden Ansprüche, dadurch gekennzeichnet, daß die Menge der Hohlfasern, bezogen auf die Feststoffe in der Gesamtausgangsmischung, maximal 1 Gew.-% beträgt.

5. Verfahren nach einem der vorhergehenden Ansprüche, dadurch gekennzeichnet, daß in der Ausgangsmischung bis zu 10 Gew.-%, bezogen auf die Feststoffe, an Pech oder Teer verwendet werden.

6. Verfahren nach einem der vorhergehenden Ansprüche, dadurch gekennzeichent, daß in der Ausgangsmischung bis zu 10 Gew.-%, bezogen auf die Feststoffe, an Bindemittelharz verwendet werden.

7. Verfahren nach einem der vorhergehenden Ansprüche, dadurch gekennzeichnet, daß als Bindemittelharz ein Phenol-Resolharz, ein Furanharz, ein modifiziertes Furanharz oder ein Epoxidharz verwendet wird.

8. Verfahren nach einem der vorhergehenden Ansprüche, dadurch gekennzeichnet, daß als feuerfeste Materialien Tabulartonerde, Zirkonmullit, Mullit, und/oder Korund verwendet werden.

9. Verfahren nach einem der vorhergehenden Ansprüche. dadurch gekennzeichnet, daß in der Ausgangsmischung weiterhin bis zu 10 Gew.-%, bezogen auf die Feststoffe, an feinzerteiltem Siliziummetall verwendet werden.

10. Verfahren nach einem der vorhergehenden Ansprüche, dadurch gekennzeichnet, daß in der Ausgangsmischung weiterhin bis zu 10 Gew.-%, bezogen auf die Feststoffe, an feinzerteiltem Ruß und/oder Graphit verwendet werden.

11. Kohlenstoffgebundens feuerfestes Formteil, hergestellt nach dem Verfahren nach einem der Ansprüche 1 bis 10.

**Claims**

1. Method of manufacturing carbon bonded refractory shaped members by producing a mixture of refractory materials, pitch or tar and a resin bonding agent, shaping into shaped members and setting and optionally tempering the shaped members, characterised in that a starting mixture is used which contains 1 to 10 wt.% of cellulose fibres as hollow fibres with respect to the added amount by weight of pitch or tar.

2. Method as claimed in claim 1, characterised in that cellulose fibres with a maximum length of 2mm are used.

3. Method as claimed in claim 2, characterised in that cellulose fibres with a maximum length of 1mm are used.

4

4. Method as claimed in one of the preceding claims, characterised in that the amount of the hollow fibres is at most 1 wt.% with respect to the solid materials in the entire starting mixture.

5. Method as claimed in one of the preceding claims, characterised in that up to 10 wt.% of pitch or tar is used in the starting mixture with respect to the solid materials.

6. Method as claimed in one of the preceding claims, characterised in that up to 10 wt.% of resin bonding agent is used in the starting mixture with respect to the solid materials.

7. Method as claimed in one of the preceding claims, characterised in that a phenol-resol resin, a furan resin, a modified furan resin or an epoxide resin is used as the bonding agent.

8. Method as claimed in one of the preceding claims, characterised in that tabular alumina, zirconium mullite, mullite and/or corundum are used as the refractory materials.

9. Method as claimed in one of the preceding claims, characterised in that up to 10 wt.% of finely divided silicon metal with respect to the solid materials is additionally used in the starting mixture.

10. Method as claimed in one of the preceding claims, characterised in that up to 10 wt.% of finely divided soot and/or graphite with respect to the solid materials is additionally used in the starting mixture.

11. Carbon bonded refractory shaped member manufactured in accordance with the method as claimed in one of claims 1 to 10.

**Revendications**

1. Procédé de fabrication d'éléments moulés réfractaires liés par carbone consistant à réaliser un mélange formé de matériaux réfractaires, de poix ou de goudron et d'un liant résineux, à transformer le mélange en éléments moulés et à durcir et éventuellement tremper lesdits éléments moulés, caractérisé par le fait que l'on utilise comme mélange de base un mélange qui contient, rapporté à la quantité en poids ajoutée de poix ou de goudron, 1 à 10 % en poids de fibres de cellulose sous forme de fibres de bois.

2. Procédé selon la revendication 1, caractérisé par le fait que l'on utilise des fibres de cellulose d'une longueur maximale de 2 mm.

3. Procédé selon la revendication 2, caractérisé par le fait que l'on utilise des fibres de cellulose d'une longueur maximale de 1 mm.

4. Procédé selon l'une des revendications précédentes, caractérisé par le fait que la quantité de fibres de bois, rapportée aux matériaux solides contenus dans le mélange de base total, représente 1 % en poids maximum.

5. Procédé selon l'une des revendications précédentes, caractérisé par le fait que l'on utilise dans le mélange de base jusqu'à 10 % en poids de poix ou de goudron, rapporté aux matériaux solides.

6. Procédé selon l'une des revendications précédentes, caractérisé par le fait que l'on utilise dans le mélange de base jusqu'à 10 % en poids de liant résineux, rapporté aux matériaux solides.

7. Procédé selon l'une des revendications précédentes, caractérisé par le fait que l'on utilise comme liant résineux une résine phénolique résol, une résine furanique, une résine furanique modifiée ou une résine époxyde.

8. Procédé selon l'une des revendications précédentes, caractérisé par le fait que l'on utilise comme matériaux réfractaires de l'argile tabulaire, de la mullite au zirconium, de la mullite et/ou du corindon.

9. Procédé selon l'une des revendications précédentes, caractérisé par le fait que l'on utilise en outre dans le mélange de base jusqu'à 10 % en poids, rapporté aux matériaux solides, de silicium métallique en fines particules.

10. Procédé selon l'une des revendications précédentes, caractérisé par le fait que l'on utilise en outre dans le mélange de base jus qu'à 10 % en poids, rapporté aux matériaux solides, de suie et/ou de graphite en fines particules.

11. Elément moulé réfractaire lié par carbone fabriqué suivant le procédé selon l'une des revendications 1 à 10.